Europäisches Patentamt

European Patent Office

Office européen des brevets

(11) Publication number: **0 447 199 A2**

# EUROPEAN PATENT APPLICATION

(21) Application number: 91302095.4

(22) Date of filing: 13.03.91

(51) Int. Cl.⁵: **B29C 67/18, B29C 67/14,** // B29K105:22

(30) Priority: 14.03.90 JP 64632/90
31.01.91 JP 32429/90

(43) Date of publication of application:
18.09.91 Bulletin 91/38

(84) Designated Contracting States:
DE FR GB IT

(71) Applicant: KABUSHIKI KAISHA TAKAMORI
SEIMITSU GIKEN
177-1-413, Kibe-cho
Ikeda-shi, Osaka-fu (JP)

(72) Inventor: Takamori, Shigeru
177-1-413, Kibe-cho
Ikeda-shi, Osaka-fu (JP)

(74) Representative: Hillier, Peter et al
Reginald W. Barker & Co., 13, Charterhouse
Square
London, EC1M 6BA (GB)

(54) Compound material and its manufacturing method.

(57) The strength of compound material is enhanced by integrally burying mesh metal plate (2) in a resin material part (1). One mesh metal plate (2) may be buried in to the resin material part (1) which may contain fibres. Alternatively, a plurality of mesh metal plates are buried in to the resin material part containing fibres in multiple layers, crossing their expansion directions.

EP 0 447 199 A2

Jouve, 18, rue Saint-Denis, 75001 PARIS

# FIG. 1.

# COMPOUND MATERIAL AND ITS MANUFACTURING METHOD

## BACKGROUND OF THE INVENTION

### Field of the Invention

The present invention relates to a compound material and its manufacturing method, including scaffold materials, provisional walkways, enclosure of construction site and others used at the site of shipbuilding, bridge construction, civil engineering, building construction or the like, various outdoor installation facilities, residential roofing materials, walls, floors, posts, beams and other accessory parts, principal structural parts and attachments of ship, vehicle, aircraft and the like, and other synthetic materials of resin and metals that can be used as secondary materials in other fields.

### Description of the Prior Art

Generally steel parts are excellent in mechanical strenght, but are heavy and become rusty, while synthetic resin parts are light and do not rust, but are inferior in mechanical strength. For example, single-pipe buckling pieces used as scaffolding materials at construction site are presented fabricated by press-forming mild steel plates, and the scaffold plates are mostly metal plates with anti-slip processing, and fringed steel plates are widely used as the stepping boards of stairs.

Scaffolding materials used at construction site are disassembled and reassembled repeatedly for many uses, but since steel parts are heavy, they are hard to transport and handle, and when rusting, they must be discarded. For example, rusting occurs very early due to salt damage in the coastal zone.

By contrast, synthetic resin parts are light and convenient for transporting and handling, and they do not rust, but the wall thickness must be increased in order to achieve a necessary strength, and they are slippery when used as the materials for scaffold and stairs.

It is hence a primary object of the invention to combine synthetic resin and metal, and present a compound material to be used so as to make the best of the advantages of the two, and its manufacturing method.

## SUMMARY OF THE INVENTION

To achieve the above object, the compound material of the invention comprises a resin material part formed in a specified shape, and a mesh metal plate formed in one body by projecting the surface on one side of the resin material part or burying in an exposed state at a flush level.

The compound material is formed by setting the surface of the mesh metal plate in a slightly sunk state from the forming pattern surface of the mold or at flush level, and feeding resin into the mold in this state.

Other compound material of the invention comprises a resin material part formed in a specified shape, a mesh metal plate formed in one body by projecting the surface on one side of the resin material part or buried in an exposed state at flush level, and fibers mixed in the resin material part, and its manufacturing method comprises the steps of setting the mesh metal plate in the mold with its surface slightly sunk from the pattern forming surface of the mold or at flush level, mixing the fibers in the mesh metal plate, and forming by feeding resin into the mold in this state.

Other different compound material of the invention comprises a resin material part formed in a specified shape, plural mesh metal plates buried and formed in one body in multiple layers and crossing the expansion direction of each layer, by projecting the surface of one layer on one side of the resin material part or exposed at flush level, and fibers mixed in the resin material part, and its manufacturing method comprises the steps of joining a plurality of said compound materials, and gluing by crossing the expansion direction of the mesh metal plates of each compound material, or setting the plural mesh metal plates in a mold, with the surface of one piece thereof slightly sunk from the forming pattern surface of the mold or at flush level, in multiple layers and crossing the expansion direction of each layer, mixing the fibers in the mesh metal plates, and forming by feeding resin into the mold in this state.

According to the above technical means, since the compound material is manufactured by projecting the surface of the mesh metal plate on one side of the resin material part which is the base or by buring in exposed state at flush level, it may be used as the smooth surface when at flush level, or this surface may be used as the face side of the scaffolding board or stepping board of stairs when projected, so that slipping of the workers on the mesh metal plate may be prevented, thereby enhancing the safety.

Besides, since the metal plate is in mesh form, the synthetic resin is formed in the intertwined state in the mesh, and the bonding force is increased.

In addition, the mechanical strength of the synthetic resin is compensated for by the mesh metal plate, and the overall weight is reduced by the synthetic resin.

In manufacturing the compound material, on the other hand, the mesh metal plate is set with its surface being slightly sunk from or flush with the forming pattern surface of the mold, and resin is fed into the mold in this state to form, so that the mesh metal plate and the synthetic resin may be formed in one body with its surface projected or exposed on the same level.

Incidentally, it is not necessary to support the mesh metal plate while lifting in the mold cavity, but it may be supported in contact with the mold surface, and supporting method is easy.

Furthermore, the strength is intensified by mixing fibers in the resin material part, and plural mesh metal plates are overlaid in multiple layers by crossing their expansion directions, so that the strength may not be lowered in any direction.

## BRIEF DESCRIPTION OF THE DRAWINGS

Fig. 1 is a plan view of a compound material sheet according to the invention;

Fig. 2 is a side view thereof;

Fig. 3 is a sectional view for explaining the forming procedure thereof by a forming mold;

Fig. 4 is an assembly state of buckling piece of single tube made of compound material of the invention;

Fig. 5 is a plan view of its main body member;

Fig. 6 is a right side view of the main body member;

Fig. 7 is a left side view of a lid member;

Fig. 8 is a partial plan view showing an embodiment of compound material of the invention;

Fig. 9 is a partial side view of the compound material shown in Fig. 8;

Fig. 10 is an explanatory sectional view of the forming procedure by a forming mold showing an embodiment of manufacturing method of compound material shown in Fig. 8 and Fig. 9;

Fig. 11 is a sectional view for explaining the forming procedure by forming mold showing other embodiment of manufacturing method of compound arterial of the invention;

Fig. 12 is a partial plan view showing a different embodiment of compound material of the invention; and

Fig. 13 is a sectional view for explaining the forming procedure by forming mold showing a different embodiment of manufacturing method of compound material of the invention.

## DETAILED DESCRIPTION OF THE PREFERRED EMBODIMENTS

Referring now to the drawings, some of the preferred embodiments of the invention are described in detail below.

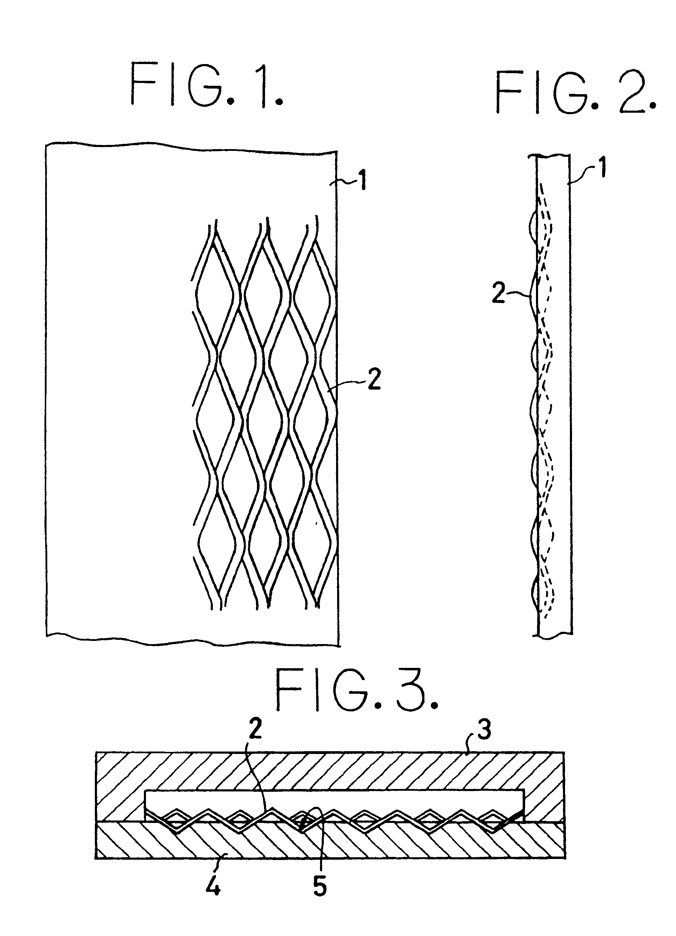

Fig. 1 is a plan view of a compound material sheet according to the invention, and Fig. 2 is a its side view, in which numeral 1 denotes a resin arterial part, and 2 is a mesh metal plate.

The resin material part 1 is formed in a sheet, and the mesh metal plate 2 is buried in its one side in a one body with its surface being exposed. The depth of burying is 1/2 or more of the thickness of the mesh metal plate 2, and preferably about 2/3. The greater the depth of burying, the stronger becomes the one-body forming, but the anti-slipping action of the surface is lowered. Meanwhile, the mesh metal plate 2 may be buried integrally, being exposed at the same level as the resin material part 1.

The resin material part 1 may be preferably made of high-performance resins known as engineering plastics, such as polyacetal, polyamide, polycarbonate, denatured polyphenylene ether, and polybutyrene terephthalate, but general-purpose plastics may be also used depending on the applications.

The mesh metal plate 2 may be made of wire mesh, lath, punching metal, or expand metal, and it is particularly desired to use the expand metal which is greater in the anti-slipping action.

The expand metal is a metal plate finely cut in alternately and pulled in the vertical direction to the cut direction to spread in a mesh form, and undulations are formed on both surfaces to have anti-slipping action. If such mesh metal plate 2 is made of mild steel, it may be galvanized to prevent from rusting, or it may be also made of stainless steel, aluminum alloy and other non-rusting material.

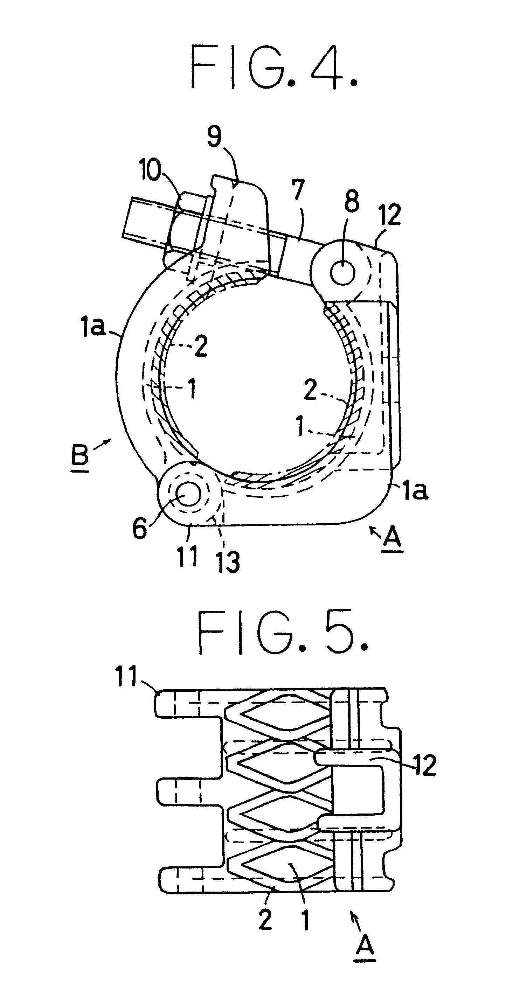

In manufacturing such compound material sheet, as shown in Fig. 3, in one of the molds 3, 4 (usually the lower pattern), the mesh metal plate 2 is set with its surface slightly sunk from the forming pattern surface of the mold or at the same level, and resin is fed into the molds 3, 4 in this state to form. In this case, in order to sink the mesh metal plate 2 in one of the molds 3, 4, an undulated part 5 may be formed in advance, or it may be set on the same level on a flat surface. The method for feeding resin into molds 3, 4 and forming may be injection, compression, lamination and other forming method.

Sinking and setting the mesh metal plate 2 in the undulated part 5 and feeding resin, when formed, only the portion sunk in the undulated part 5 is projected and exposed, and the mesh metal plate 2 is buried in one body in the resin material part 1, thereby obtaining a compound material. Or by setting at same level without sinking, an integrally buried compound material is obtained in a state of the surface of the mesh metal plate 2 exposed on the same surface as the resin material part 1.

Fig. 4 shows a front view of the assembly state of the buckling piece of single tube made of compound material of the invention, in which a main body member A and a lid member B are openably coupled at one end by a pin 6, one end of a bold 7 is pivoted to the other end of the main body member A by a pin 8, a bifurcate engaging part 9 is integrally formed at the other end of the lid member B, and the free end of the bolt 7 is fitted to the bifurcate engaging part 9, and a nut 10 is turned and tightened to buckle the single tube (not shown).

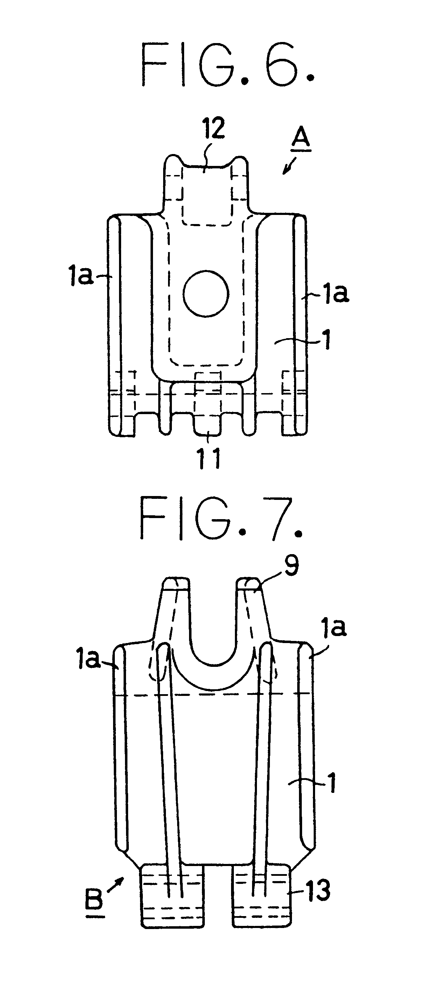

The main body member A is made of the resin material part 1 on the whole, and the mesh metal plate 2 is buried integrally inside with the surface exposed, and Fig. 5 is a plan view of only the main body member A as seen from the top, and Fig. 6 is a right side view of only the main body member A as seen from the right side.

The mesh metal plate 2 buried inside the main body member A has the shorter diagonal lines of longer and short diagonal lines in the rhombic mesh pattern disposed in the axial direction of the single tube, so that the anti-slipping action of the single tube in the axial direction may be increased. Of course, the anti-rotation action in the circumferential direction of the single tube is also provided.

The resin material part 1 of the main body member A integrally forms bracket parts 11, 12 for inserting the pins 6, 8, and a rib 1a is properly formed on the outer side so that a necessary strength is maintained while reducing the wall thickness.

The lid member B is also made entirely of the resin material part 1, and the mesh metal plate 2 is integrally buried inside with the surface exposed, and Fig. 7 is a left side view of only the lid member B as seen from the left side.

The mesh metal plate 2 buried inside the lid member B is similar to the main body member A, and a bracket 13 for inserting the pin 6 is integrally formed, and a proper rib 1a is formed outside to so that a necessary strength is maintained while reducing the wall thickness.

The main body member A and lid member A are formed by separate molds (not shown), and at this time the mesh metal plate 2 is cut to a desired shape and curved in an arc form by a press or the like so as to be slightly sunk from the pattern surface as shown in Fig. 3, and resin is supplied to form. The pin hole is formed simultaneously, or may be pierced after forming, thereby setting up as shown in Fig. 4.

The invention, as illustrated herein, may be applied not only to scaffolding materials such as scaffolding boards and single tube buckling pieces, but also to main structural materials and accessories of various applications, but anyway the base of the parts if the resin material part 1, and the mesh metal plate 2 is buried on its one side integrally by exposing the surface. In this case, the undulated part 5 is formed in one of the molds for forming the resin material part 1, and the surface of the mesh metal plate 2 is sunk and set in this undulated part 5, or it is set at flush level, and resin is supplied to form. Of course, the mesh metal plate 2 is formed in a profile after the surface of the mold.

Whether the surface of the mesh metal plate 2 is projected from the resin material part 1 or flush therewith is determined by the application and purpose.

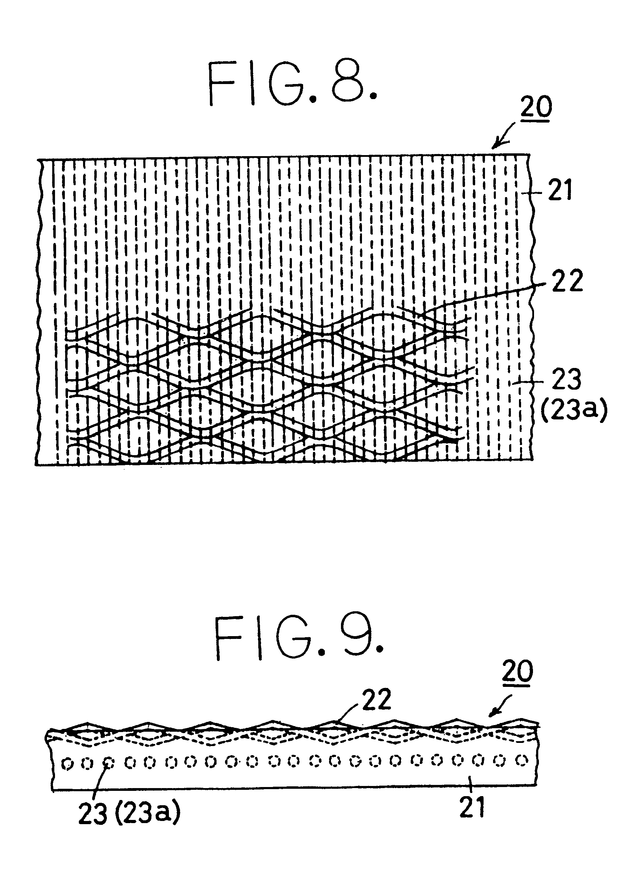

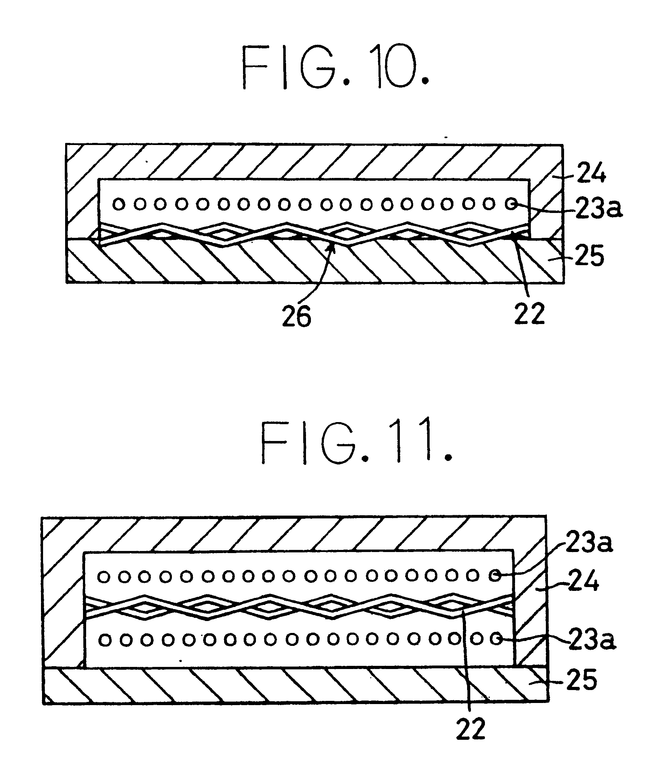

Other embodiments of the compound material and its manufacturing method of the invention are illustrated below in Figs. 8 to 13. First, Fig. 8 and Fig. 9 are partial plan view and side view of a compound material 20 of the invention, in which numeral 21 is a resin material part, 22 is a mesh metal plate, and 23 is fibers. The resin material part 21 is formed in a sheet same as in the prior art, and the mesh metal palte 22 is integrally buried in its one side, with the surface being exposed. The depth of burying is 1/2 or more of the thickness of the mesh metal plate 22, and preferably about 2/3, and the deeper, the stronger becomes the integrated assembly, but the surface antislipping action is lowered. Meanwhile, the mesh metal plate 22 may be integrally buried by exposing the surface at the same level as the resin material part 21. The resin material is same as in the foregoing embodiment. The mesh metal plate 22 may be also made of, same as in the former embodiment, lath, punching metal, expand metal, or wire mesh composed of multiple long parallel or crossing wires, or random short cut wires.

The fibers 23 are mixed in the resin material part 21, and, for example as shown in the drawing, long filaments 23a are laminated with their longitudinal direction set in the pulling direction (expanding direction) of the expand metal 22, that is, at right angle to the cutting direction, separately, and mixed in layers. As a result, in the pulling direction which is weak in strength, the strength of the resin material part 21 is increased so as to be reinforced as the compound material 20. As the material of long filaments 23a, examples may include glass fiber, carbon fiber, polyamide fiber, other fibers alone or in twist, monofilament, multi-filament, tape, ribbon or the like. Instead of long filaments 23a, short fibers or chopped fibers may be also mixed, or a woven cloth may be also used.

In manufacturing the compound material 20, as shown in Fig. 10, in one of the molds 24, 25 (usually the lower pattern), the mesh metal plate 22 is set, with its surface slightly sunk from the pattern surface of the mold, or at the same level. At the same time, by holding the fibers 23 (long filaments 23a in the illustrated example) at both ends by the mold, they are laminated separately and in layers with respect to the mesh metal plate 22, and resin is fed into the patterns 24, 25 in this state to form. In this case, too, same as in the prior art, an undulated part 26 may be preliminarily formed in one pattern surface of the molds 24, 25 for sinking and setting the mesh metal plate 22, or it may be also set flush on a flat surface. Meanwhile, if the fibers 23 are a woven cloth, the long filaments 23a may be replaced in the mold, or when using short fibers, they may be mixed in the resin before feeding.

Also as shown in Fig. 11, it is also possible to set the mesh metal plate 22 between the molds 24, 25 and laminate separately two layers of lamellar long fiber 23 in a sandwich form across the mesh metal plate 22, and form by feeding resin into the molds 24, 25 in this state.

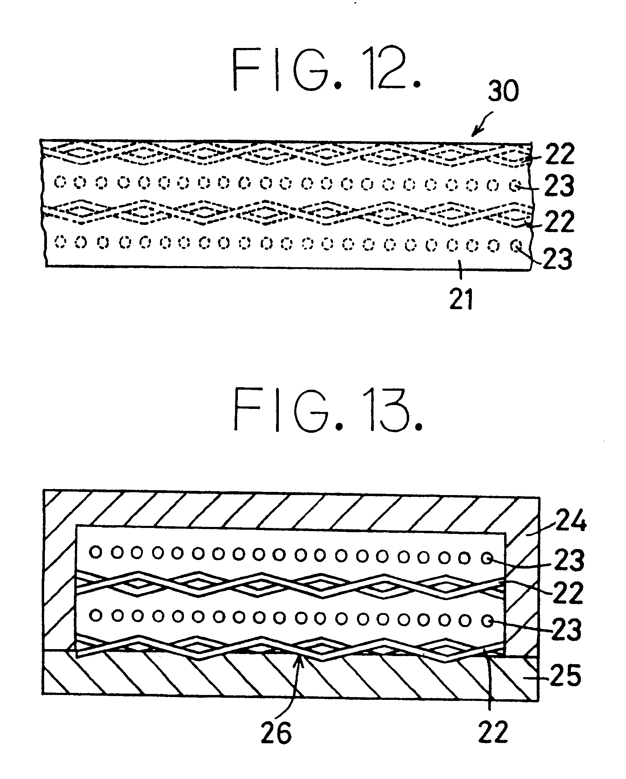

Another embodiment of the invention is shown in Figs. 12 and 13. Fig. 12 is a partial plan view of a compound material 30 of the invention, in which numeral 21 is a resin material part, 22 is a mesh metal plate, and 23 is fibers. What is different from the compound material 20 in the preceding embodiment is that the mesh metal plate 22 is formed in multiple layers (for example, two layers), and that the expansion direction of each layer is cross to bury integrally in the resin material part 21, and as for mixing of fibers 23, in the illustrated example, lamellar long filaments are laminated and mixed alternately and separately from each layer of the mesh metal plate 22, and the longitudinal direction is intersected with the expansion direction of the mesh metal plate 22. Furthermore, same as in the preceding embodiments, instead of the long filaments, short fibers or woven cloth may be used. As for the mesh metal plate 22 of the uppermost layer, its surface is exposed by projecting or at same level with respect to one side of the resin material part 21, and the latter case is shown in the illustrated example.

In manufacturing such compound material 30, a plurality (for example, two) of the compound material 20 relating to the foregoing embodiment are prepared, having the surface of the mesh metal plate 22 exposed on the same level as one side of the resin material part 21. They are joined together, and glued by crossing the expansion direction of the mesh metal plate 22 of each compound material 30.

Or, as shown in Fig. 13, a plurality (for example, two) of mesh metal plates 22 are set in the molds 24, 25, with the surface of one of them slightly sunk from or at same level as the forming pattern surface of one of the molds (usually the lower pattern), while the other is held in the mold at its one end, thereby setting in two layers. Each layer is intersecting in the expansion direction. At the same time, the fibers (long filaments in the illustrated example) are held in the mold at both ends, so as to be laminated and mixed in two layers separately, with respect to the mesh metal plate 22, and resin is fed into the molds 24, 25 in this state to form. In this case, too, same as in the prior art, an undulated part 26 may be preliminarily formed in the forming pattern surface of one of the molds 24, 25 for sinking and setting the mesh metal plate 22, or it may be set on the same level in flat surface.

Such compound material 20 or 30 is suitable as universal material for temporary enclosure of the construction site, other wall material and roofing materials. In this case, in order to have heat insulating, sound absorbing or sound suppressing effect, a heat insulating material or sound absorbing material may be sandwiched by a pair of compound materials 20 or 30 in a one-body structure. Besides, by projecting the surface of the uppermost layer of the mesh metal plate 22 to one side of the resin material part 21 to have an anti-slipping action and by painting in a desired color, it may be also applied to roof tile materials replacing colored iron plates. Furthermore, as the rigid flooring materials for high-rise car park, it may be useful to replace the heavy, and hard-to-handle metal floors. Where anti-slipping action is not needed, the mesh metal plate 22 may be buried inside the resin material part 21.

The compound material of the invention may be used to present strong and lightweight parts, by making the best of the advantage of electric insulation and other performance depending on the applications owing to the lightness and freedom from rusting of resin, while compensating the shortcomings of the resin by the reinforcing action and anti-slipping action of the mesh metal plate.

Also according to the invention, the mesh metal plate is buried in one body into the resin material part containing fibers, or plural mesh metal plates are laminated in multiple layers by crossing the expansion direction and buried in one body to compose the compound material, and hence the strength of the compound material is enhanced regardless of the expansion direction of the mesh metal plate, and lightweight, easy-to-hand, and rigid plate materials are presented.

## Claims

1. A compound material comprising a resin material part formed in a specified shape, and a mesh metal plate formed in one body by burying into one side of this resin material part by projecting the surface or exposing at the same level.

2. A manufacturing method of a compound material by setting the mesh metal plate in a mold with its surface slightly sunk from or at same level with the pattern forming surface thereof, and forming by feeding resin into the mold in this state.

3. A compound material comprising a resin material part formed in a specified shape, and a mesh metal plate formed in one body by burying into one side of this resin material part by projecting the surface or exposing at the same level, and fibers mixed in the resin material part.

4. A manufacturing method of the compound material of claim 3 by setting the mesh metal plate in a mold with its surface slightly sunk from or at same level with the pattern forming surface thereof, mixing fibers in the mesh metal plate, and forming by feeding resin into the mold in this state.

5. A compound material comprising a resin material part formed in a specified shape, plural mesh metal plates buried in one body in the resin material part in multiple layers, with the surface of one layer projected or exposed at the same level on one side thereof, and crossing the expansion direction of each layer, and fibers mixed in the resin material part.

6. A manufacturing method of the compound material of claim 5 comprising the steps of joining a plurality of the compound materials of claim 3, and gluing by crossing the expansion direction of the mesh metal plates of each compound materials.

7. A manufacturing method of the compound material of claim 5 comprising the steps of setting the plural mesh metal plates in the mold, with the surface of one piece thereof slightly sunk from or at same level as the forming pattern surface of the mold in multiple layers, and crossing the expansion direction of each layer, mixing the fibers in the mesh metal plates, and forming by feeding resin into the mold in this state.

# FIG. 1.

# FIG. 2.

# FIG.3.

# FIG.4.

# FIG.5.

# FIG.6.

# FIG.7.

# FIG.8.

20

21

22

23
(23a)

# FIG.9.

22

20

23 (23a)

21

# FIG.10.

# FIG.11.

# FIG. 12.

# FIG. 13.